# EUROPÄISCHE PATENTSCHRIFT

(11) **EP 0 698 069 B1**
(45) Veröffentlichungstag und Bekanntmachung des Hinweises auf die Patenterteilung: **15.10.1997**
(21) Anmeldenummer: 94916215.0
(22) Anmeldetag: 07.05.1994
(51) Int. Cl.: C09D 7/14, C08K 3/00, C09D 175/04, C08G 18/10, C08G 18/80, C08L 75/04

(54) **FÜLLSTOFFPASTE ZUR VERWENDUNG IN BASISLACKEN ZUR BESCHICHTUNG VON KUNSTSTOFF- UND METALLSUBSTRATEN, BASISLACKE SOWIE VERFAHREN ZUR DIREKTLACKIERUNG VON METALL- UND KUNSTSTOFFSUBSTRATEN**
FILLER PASTE FOR USE IN BASIC PAINTS FOR COATING PLASTIC AND METAL SUBSTRATES, BASIC PAINT AND PROCESS FOR DIRECTLY PAINTING METAL AND PLASTIC SUBSTRATES
MATIERE DE CHARGE SOUS FORME DE PATE S'UTILISANT DANS DES PEINTURES DE BASE POUR RECOUVRIR DES SUBSTRATS PLASTIQUES ET METALLIQUES, PEINTURE DE BASE ET PROCEDE PERMETTANT DE PEINDRE DIRECTEMENT DES SUBSTRATS METALLIQUES ET PLASTIQUES

(30) Priorität: 10.05.1993 DE 4315467
(43) Veröffentlichungstag der Anmeldung: 28.02.1996
(73) Patentinhaber: BASF Lacke + Farben AG, 48165 Münster-Hiltrup (DE)
(72) Erfinder: LEIBFARTH, Frank, D-72555 Metzingen (DE); OSLOWSKI, Hans-Josef, D-48163 Münster (DE); HARTUNG, Michael, D-59590 Geseke (DE); BÖHM, Doris-Maria, D-48165 Münster (DE); GÖBEL, Andreas, D-50769 Köln (DE)
(86) Internationale Anmeldenummer: EP9401471
(87) Internationale Veröffentlichungsnummer: WO9426827

(56) Entgegenhaltungen:
- EP-A- 0 311 209
- DE-A- 2 331 792

## Beschreibung

Die vorliegende Erfindung betrifft Füllstoffpasten zur Verwendung in Basislacken zur Beschichtung von Kunststoff- und Metallsubstraten, derartige Füllstoffpasten enthaltende Basislacke sowie Verfahren zur Direktlackierung von Kunststoff- und Metallsubstraten.

Automobilkarossen, Anbauteile für die Automobilindustrie sowie eine Vielzahl von Teilen für Nicht-Automobil-Anwendungen werden aus verschiedensten Metallen und zunehmend aus Kunststoff gefertigt.

Kunststoffbeschichtungen müssen einerseits eine gute Haftung auf dem jeweiligen Kunststoffsubstrat aufweisen, andererseits müssen Kunststoffbeschichtungen Oberflächenfehler der Kunststoffsubstrate abdecken. Eine direkte und damit grundierungsfreie Lackierung von Effekt-Basislacken oder Uni-Basislacken auf übliche Kunststoffsubstrate ist problematisch, da ohne vorherige Grundierung Oberflächenfehler, wie z. B. Fließlinien, nicht ausreichend abgedeckt werden können.

Oberflächenfehler bei solchen Kunststoffsubstraten und bei Metallsubstraten, wie Riefen, Poren, Lunker oder Fließlinien, werden üblicherweise durch dickschichtige Primer und/oder Decklacke abgedeckt. Bei der Applikation von Uni- oder Effekt-Basislacken mit hohen Ansprüchen an optische und weitere technologische Eigenschaften ist der vorherige Auftrag eines Primers bzw. eines Füllers unerläßlich. Eine direkte, primerfreie bzw. füllerfreie Lackierung von Basislacken ist daher bei den herstellungsbedingten Inhomogenitäten der polaren Kunststoffoberfläche bzw. der Metalloberfläche nur unter deutlichen Qualitätseinbußen möglich.

Es ist bekannt, festkörperreiche, sogenannte High-Solid-(HS-) Basislacke einzusetzen. Der hohe Festkörper der Basislacke verschlechtert aber deutlich die Ausbildung des metallischen Effekts ("Flop"), außerdem sind derartige High-Solid-Basislacke für die Niedrigtemperaturtrocknung von Kunststoffen ohnehin nur bedingt einsetzbar. Ein weiterer Nachteil besteht in der mangelhaften Schleiffähigkeit der aus High-Solid-Lacken resultierenden Beschichtungen, was darauf zurückzuführen ist, daß die High-Solid-Basislacke i. a. keine mineralischen Füllstoffe enthalten.

Aus der DE-A-40 14 212 sind Effekt-Basislacke zur Beschichtung von Polypropylen-Substraten bekannt, wobei die Effekt-Basislacke physikalisch trocknende Bindemittel, chlorierte Polyolefine, Celluloseacetobutyrat, Effektpigmente, z. B. Metallic-Pigmente oder Pigmente auf Basis von Glimmerplättchen bzw. Mica-Plättchen, ggf. Farbpigmente und organische Lösemittel enthalten. Die beschriebenen Basislacke können direkt auf das Kunststoffsubstrat aufgebracht werden, ohne daß es zu Haftungsproblemen kommt. Bei der Verwendung der aus der DE-A-40 14 212 bekannten Effekt-Basislacke zur Beschichtung von Kunststoffsubstraten ohne vorherige Grundierung der Kunststoffsubstrate tritt jedoch das Problem auf, daß vorhandene Oberflächenfehler, wie z. B. Fließlinien, nicht ausreichend abgedeckt werden können. Außerdem treten bei Verwendung der mit den Effekt-Basislacken beschichteten Kunststoffsubstrate auf dem Automobilsektor Probleme hinsichtlich der Steinschlagbeständigkeit auf. Eine Anwendbarkeit der beschriebenen Basislacke für metallische Substrate geht aus der DE-A-40 14 212 nicht hervor.

Aus der DE-A-23 31 792 sind ferner Pigmentpasten für Textilbeschichtungsmittel bekannt, die 3 bis 20 Gew.-% eines Polyesterpolyurethans, 3 bis 70 Gew.-% eines Pigmentes, 20 bis 30 Gew.-% organisches Lösemittel und ggf. Verdickungsmittel und Füllstoffe enthalten.

Schließlich ist aus der EP-A-311 209 ein Mischsystem zur Herstellung von Lacken mit unterschiedlichen, genau festgelegten Farbtönen bekannt, bei dem diese Farbtöne unter Verwendung von 2 verschiedenen Basisfarben und mehreren verschiedenen Pigmentpasten herstellbar sind.

Die der vorliegenden Erfindung zugrunde liegende Aufgabe bestand daher darin, die zuvor geschilderten Nachteile des Standes der Technik zu beseitigen. So sollten Basislacke zur Beschichtung von üblichen, insbesondere polaren Kunststoffsubstraten, wie z. B. Polycarbonat, Polyamid, Polystyrol, Styrolcopolymerisate, Polyester, Polyphenylenoxide, vorbehandelte, d. h. oberflächenaktivierte Polyolefine, sowie Blends dieser und weiterer Kunststoffe, Reaktionskunststoffe, z. B. PUR-RIM, SMC, BMC u. ä. sowie von Metallsubstraten, zur Verfügung gestellt werden, mit denen eine direkte Lackierung dieser Substrate möglich ist, das heißt, bei deren Verwendung auf die Verwendung von Primern bei Kunststoffsubstraten bzw. Füllern bei Metallsubstraten, die für die Automobillackierung geeignet sein sollen, verzichtet werden kann, was eine erhebliche Kostenersparnis zur Folge hat. Die Basislacke sollten eine gute Haftung auf dem Substrat aufweisen, und sie sollten trotz Einsparung einer Grundierung insbesondere zu einer guten Abdeckung von Oberflächenfehlern, wie z. B. Riefen und Fließlinien, führen.

Die Aufgabe wird überraschenderweise gelöst durch Basislacke B), die zur direkten Beschichtung, d. h. primerfreien bzw. grundierungsfreien Beschichtung, von polaren Kunststoffsubstraten und Metallsubstraten geeignet sind und die eine Füllstoffpaste A) enthalten.

Die vorliegende Erfindung betrifft eine Füllstoffpaste A), enthaltend
a1) 5 bis 50 Gew.-%, bevorzugt 30 bis 45 Gew.-%, eines Polyurethanharzes oder mehrerer Polyurethanharze,
a2) 0 bis 30 Gew.-% eines oder mehrerer Aminoplastharze und/oder eines blockierten Polyisocyanats oder mehrerer Polyisocyanate,
a3) 0 bis 50 Gew.-%, bevorzugt 0 bis 10 Gew.-%, eines oder mehrerer sich von al) unterscheidender physikalisch trocknender Bindemittel,
a4) 5 bis 35 Gew.-% eines oder mehrerer Füllstoffe und/oder Extender,
a5) 0 bis 15 Gew.-% Farb- und/oder Effektpigmente,
a6) 0 bis 5 Gew.-% eines oder mehrerer Rheologiehilfsmittel und
a7) 20 bis 60 Gew.-% organische Lösemittel,
wobei die Summe der Komponenten a1) bis a7) jeweils 100 Gew.-% beträgt.

Die Füllstoffpaste A) wird gemäß der vorliegenden Erfindung in Basislacken B) zur direkten Beschichtung der zuvor genannten Substrate eingesetzt. Im folgenden werden die einzelnen Bestandteile der erfindungsgemäßen Füllstoffpaste A) näher erläutert.

Die Füllstoffpaste A) enthält 5 bis 50 Gew.-%, bevorzugt 30 bis 45 Gew.-%, eines Polyurethanharzes oder mehrerer Polyurethanharze a1). Für den Fall, daß die Füllstoffpaste A) keine Vernetzerkomponente a2) enthält, handelt es sich dabei um elastische, aromatische und/oder aliphatische, verzweigte oder lineare Polyurethanelastomere mit einem guten physikalischen Trocknungsvermögen und einem hohen spezifischen Volumen. Die Polyurethanelastomere können freie, zur Vernetzung zur Verfügung stehende Hydroxylgruppen aufweisen. Die physikalisch trocknenden Polyurethanelastomere sind einerseits hochmolekular, andererseits weisen sie trotz ihres hohen Molekulargewichts eine gute Löslichkeit bzw. relativ niedrige Viskosität auf. Geeignete Polyurethanharze sind im Handel erhältlich unter der Bezeichung Uraflex XP 221 und XP 222 (Hersteller: DSM) sowie Desmolac 2100 (Hersteller: Bayer).

Für den Fall, daß die Füllstoffpaste A) eine Vernetzerkomponente a2) enthält, wird als Komponente al) mindestens ein Polyurethanharz mit einer ausreichend hohen Hydroxylzahl eingesetzt, d.h. das,Polyurethanharz weist eine OH-Zahl im Bereich von 50 bis 500, bevorzugt im Bereich von 100 bis 350 mg KOH/g auf. Die zur Herstellung der hydroxylgruppenhaltigen Polyurethanharze eingesetzten Polyole können niedermolekular und/oder hochmolekular sein. Als höhermolekulare Polyolkomponente werden gesättigte oder ungesättigte Polyesterpolyole und/oder Polyetherpolyole mit einer Molmasse von 400 bis 5000 eingesetzt. Die Polyesterpolyole werden durch Veresterung von organischen Dicarbonsäuren oder ihren Anhydriden mit organischen Diolen hergestellt, oder sie leiten sich von einer Hydroxycarbonsäure oder einem Lacton ab. Um verzweigte Polyesterpolyole herzustellen, können in geringem Umfang Polyole oder Polycarbonsäuren mit einer höheren Wertigkeit verwendet werden. Die zur Herstellung der Polyurethanharze verwendeten Isocyanate sind aliphatische, cycloaliphatische und/oder aromatische Polyisocyanate mit mindestens zwei Isocyanatgruppen pro Molekül. Bevorzugt sind die Isomeren oder Isomerengemische organischer Diisocyanate. Die Polyisocyanatkomponente kann auch einen Anteil höherwertiger Polyisocyanate enthalten. Die mittlere Funktionalität kann gegebenenfalls durch Zusatz von Monoisocyanaten gesenkt werden. Beispiele für geeignete Polyisocyanate sind 1,3-Bis(2-isocyanatoprop-2-yl)benzol, Phenylendiisocyanate, Toluylendiisocyanate, Xylylendiisocyanat, Biphenylendiisocyanat, Naphthylendiisocyanat, Diphenylmethandiisocyanate, Isophorondiisocyanat, Cyclopentylendiisocyanat, Cyclohexylendiisocyanat, Methylcyclohexylendiisocyanat, Dicyclohexylmethandiisocyanat, Trimethylendiisocyanat, Tetramethylendiisocyanat, Pentamethylendiisocyanat, Hexamethylendiisocyanat, Propylendiisocyanat, Ethylethylendiisocyanat und Trimethylhexandiisocyanat.

Die hydroxylgruppenhaltigen Polyurethanharze können durch gleichzeitige Umsetzung des Polyisocyanats mit einem Polyol-Überschuß hergestellt werden. Die Umsetzung kann auch stufenweise erfolgen. Die Herstellung kann ggf. in Gegenwart eines Katalysators, wie Organozinnverbindungen und/oder tertiären Aminen, durchgeführt werden. Die Umsetzung wird üblicherweise in Gegenwart organischer Lösemittel, die keinen aktiven Wasserstoff nach Zerewitinoff enthalten, durchgeführt.

Die erfindungsgemäße Füllstoffpaste A) enthält als Komponente a2) 0 bis 30 Gew.-% eines oder mehrerer Aminoplastharze und/oder eines blockierten Polyisocyanats oder mehrerer blockierter Polyisocyanate. Für den Fall, daß die Füllstoffpaste A) ausschließlich physikalisch trocknende Polyurethanharze (Komponente a1)) enthält, wird kein Aminoplastharz und kein blockiertes Polyisocyanat verwendet. Enthält die Komponente a1) ein Polyurethanharz mit einer ausreichenden Anzahl an vernetzbaren Hydroxylgruppen, enthält die Füllstoffpaste A) Aminoplastharze oder blockierte Polyisocyanate als Vernetzungsmittel.

Typische Aminoplastharze sind Melamin-, Benzoguanamin- und Harnstoff-Formaldehydharze. Bevorzugt werden diese in mit niederen Alkoholen, meistens Methanol und/oder Butanol, veretherter Form verwendet. Geeignete Aminoplastharze sind beispielsweise unter dem Warenzeichen Cymel, Luwipal, Maprenal und Beetle auf dem Markt erhältlich. Besonders bevorzugt werden als Komponente a2) Melaminharze eingesetzt.

Ein geeignetes Aminoplastharz ist beispielsweise Hexamethoximethylmelamin.

Selbstverständlich sind neben den Kondensationsprodukten mit Formaldehyd auch solche mit anderen Aldehyden verwendbar.
Typische blockierte Polyisocyanate sind Additionsprodukte von Polyisocyanaten, beispielsweise vom Typ Hexamethylendiisocyanat oder Toluylendiisocyanat, mit geeigneten Blockierungsmitteln, wie Malonsäurediethylester, Acetessigester, Hydroxylamin, Caprolactam, Aryl- und Alkylmercaptanen, Monomethylanilin, Acetonoxim, Diphenylamin, Phenolen und α-Pyrrolidon. Sie sind auf dem Markt beispielsweise unter der Handelsbezeichnung Desmodur erhältlich.
Zur Herstellung der blockierten Polyisocyanate können selbstverständlich auch NCO-Präpolymere verwendet werden, bei diesen blockierten Isocyanaten handelt es sich beispielsweise um mit Phenol blockierte Polyisocyanate auf Basis von Toluylendiisocyanat und einer Triolkomponente (Handelsprodukte Desmodur AP, Bayer AG; Mondur S, Mobay; Suprasec 5100, ICI).

Die Vernetzerharze der Komponente a2) werden verwendet, wenn Trocknungstemperaturen von mehr als 90°C angewendet werden. Dies ist bei der Lackierung von Metallsubstraten der Fall, während bei der Lackierung von Kunst-stoffsubstraten niedrige Trocknungstemperaturen erwünscht sind. Im letzteren Fall werden die als Komponente al) eingesetzten Polyurethanharze ausschließlich physikalisch getrocknet und demzufolge keine Komponente a2) verwendet.

Als Komponente a3) enthält die erfindungsgemäße Füllstoffpaste A) 0 bis 50 Gew.-%, bevorzugt 0 bis 10 Gew.-%, eines oder mehrerer sich von a1) unterscheidender physikalisch trocknender Bindemittel. Unter physikalischem Trocknungsvermögen ist zu verstehen, daß die Bindemittel nach Abgabe der organischen Lösemittel aus dem Lackfilm bei Trocknung unterhalb von etwa 50 °C dem Lackfilm keine klebrigen Eigenschaften mehr verleihen. Bindemittel dieser Art sind dem Fachmann geläufig; es handelt sich dabei um übliche Bindemittel, wie sie als Lackrohstoffe im Handel erhältlich sind. Beispiele für geeignete physikalisch trocknende Bindemittel sind Polyesterharze, Alkydharze, Polyacrylatharze, Cellulosederivate, Melaminharze u. ä.. Die physikalisch trocknenden Bindemittel der Komponente a3) beeinflussen technologische Eigenschaften, wie z. B. Überlackierbarkeit und das Trocknungsverhalten. Bevorzugt werden die sich von der Komponente a1) unterscheidenden, physikalisch trocknenden Bindemittel (a3) in einem Anteil von 0 bis 10 Gew.-% eingesetzt.

Die erfindungsgemäße Füllstoffpaste A) enthält 5 bis 35 Gew.-%, bevorzugt 20 bis 30 Gew.-%, eines oder mehrerer Füllstoffe und/oder Extender (Komponente a4)). Beispiele für geeignete Füllstoffe und/oder Extender sind silikatische Füllstoffe, wie beispielsweise Kaolin (China Clay), Talkum, Kieselkreide, verschiedene Glimmersorten, wie beispielsweise Eisenglimmer, sowie Siliciumcarbid und Quarzmehl; carbonatische Füllstoffe, wie beispielsweise Kreide und Dolomit; sulfatische Füllstoffe, wie beispielsweise Barium- und Calciumsulfat. Die Komponente a4) ist eine wesentliche Komponente der Füllstoffpaste A) und führt dazu, daß zum einen das mechanisch-technologische Niveau (z. B. bezüglich Steinschlagschutz) deutlich verbessert wird, zum anderen aber eine ausgezeichnete optische Abdeckung von Substratfehlern erreicht wird.

Gegebenenfalls können in der erfindungsgemäßen Füllstoffpaste A) bis zu 15 Gew.-% Farb- und/oder Effektpigmente eingesetzt werden. Beispiele für geeignete anorganische Farbpigmente sind Weißpigmente, wie beispielsweise Titandioxid, Bleiweiß, Zinkweiß, Schwarzpigmente, wie beispielsweise Ruß, Buntpigmente, beispielsweise Eisenoxid- und Chromoxid-Pigmente, oxidische Mischphasenpigmente. Als Effektpigmente können in der erfindungsgemäßen Füllstoffpaste A) Metallic-Pigmente oder Effektpigmente auf der Basis von Glimmerplättchen bzw. Mica-Plättchen eingesetzt werden, wie sie z. B. auf dem Gebiet der Kraftfahrzeuglackierung üblich sind. Es können auch speziell für die Beschichtung von Kunststoffsubstraten elektrisch leitfähige Pigmente verwendet werden. Der Einsatz von Farb- und Effektpigmenten incl. Ruß ist fakultativ und wird nur bei höchsten Ansprüchen an die Farbtongenauigkeit verwendet. In den meisten Fällen wird ein hellgrau getönter Pastenzusatz für helle Farbtöne und ein dunkelgrau getönter Zusatz für dunkle Farbtöne empfohlen. Das Pigment/Bindemittelverhältnis der erfindungsgemäßen Füllstoffpaste A) beträgt etwa 1 : 0,6 - 2,0, bevorzugt 1 : 1,3 - 1,8, wobei bei der Bestimmung des Pigment/Bindemittelverhältnisses der Begriff "Pigment" alle anorganischen Bestandteile, wie z. B. Extender und anorganische Rheologiehilfsmittel, umfaßt.

Die erfindungsgemäßen Füllstoffpasten A) enthalten 0 bis 5 Gew.-% eines oder mehrerer Rheologiehilfsmittel, wie z. B. Wachse, Assoziativ-Verdicker, Schichtsilikate, organisch modifizierte Mineralstoffe u. ä., wie sie dem Fachmann geläufig und kommerziell erhältlich sind. Der Einsatz der Rheologiehilfsmittel ist fakultativ und dient zur Erfüllung höchster Ansprüche an die Standfestigkeit des Naßfilms. Durch die ausgewählten Bindemittel/Pigment-Kombinationen sowie durch das gewählte Bindemittel/Pigment-Verhältnis wird bereits eine sehr gute Standfestigkeit und damit Schichtdicke gewährleistet.

Die Komponente a7) der erfindungsgemäßen Füllstoffpasten besteht aus 20 bis 60 Gew.-% organischer Lösemittel. Dabei handelt es sich um übliche Lacklösemittel, wie niedermolekulare Ester, Aromaten, Glykolester, Glykolether usw., wobei die organischen Lösemittel insbesondere auf die Verträglichkeit mit den verwendeten Polyurethanharzen (Komponente a1)) abgestimmt werden. Der Einsatz aliphatischer und aromatischer Verschnittmittel ist daher nur begrenzt möglich. Beispiele für besonders geeignete organische Lösemittel sind Xylole, Butylacetat und Ether bzw. Ester des Propylenglykols.

Die erfindungsgemäßen Füllstoffpasten A) werden hergestellt, indem die vorgesehenen Pigmente und Extender in einer Teilmenge des Gesamtbindemittels vordispergiert und anschließend zu ausreichender Kornfeinheit gemahlen werden. Als Auflackmischung dienen die übrige Bindemittelmenge sowie Rheologiehilfsmittel und Lösemittel.

Die vorliegende Erfindung betrifft ebenfalls Basislacke B) zur Beschichtung von Metall- und Kunststoffsubstraten, wobei die Basislacke B) die erfindungsgemäße Füllstoffpaste A) in einem Anteil von 10 bis 70 Gew.-% enthalten. Die Füllstoffpasten A) werden gemäß der vorliegenden Erfindung handelsüblichen Basislacken, die zur Beschichtung von Metall- oder Kunst-stoffsubstraten geeignet sind, zugesetzt. Die vorliegende Erfindung betrifft daher ebenfalls Basislacke B) zur Beschichtung von Metall- und Kunststoffsubstraten, die dadurch gekennzeichnet sind, daß sie 10 bis 70 Gew.-% der zuvor beschriebenen Füllstoffpaste A) und 90 bis 30 Gew.-% einer üblichen Basislackzusammensetzung C), enthaltend ein oder mehrere Bindemittel, gegebenenfalls Rheologiehilfsmittel, Farb- und/oder Effektpigmente und organische Lösemittel, enthalten, wobei das Gesamtgewicht der Basislacke B) 100 Gew.-% beträgt. Bevorzugt enthalten die erfindungsgemäßen Basislacke B) 30 bis 60 Gew.-% der Füllstoffpaste A) sowie 70 bis 40 Gew.-% einer üblichen Basislackzusammensetzung C).

Übliche Basislackzusammensetzungen C), die zusammen mit der erfindungsgemäßen Füllstoffpaste A) zu dem erfindungsgemäßen Basislack B) kombiniert werden, sind solche aus handelsüblichen Rohstoffen, wie Polyestern, Polyacrylaten, Cellulosederivaten, Rheologiehilfsmitteln, wie z. B. Wachsen, sowie Farb- und/oder Effektpigmenten, wie beispielsweise Metallic-Pigmenten und Glimmerplättchen. übliche Farbpigmente sind die bereits bei der Beschreibung der Komponente a5) der Füllstoffpaste A) zuvor beschriebenen Pigmente. Derartige Basislacke sind dem Fachmann bekannt und brauchen daher nicht weiter beschrieben zu werden. Besonders bevorzugt werden als Bindemittel für die Basislackzusammensetzung C) Polyacrylatharze, Polyesterharze und Alkydharze verwendet, denen Celluloseacetobutyrat zugesetzt wird.

Die zuvor beschriebenen erfindungsgemäßen Basislacke B) können ohne vorherige Applikation einer Grundierung und eines Füllers auf Metallsubstrate bzw. ohne vorherige Grundierung auf Kunststoffsubstrate aufgebracht werden, wobei die erhaltenen Beschichtungen eine ausgezeichnete Haftung aufweisen und Oberflächenfehler, insbesondere Riefen und Fließlinien, in hervorragender Weise abgedeckt werden. Bei erhöhten Ansprüchen an den Korrosionsschutz, wie dies der Fall ist bei beschichteten Metallsubstraten für die Automobillackierung, erfolgt die Applikation des Basislackes B) direkt auf das mittels Elektrotauchlackierung grundierte Metallsubstrat.

Die vorliegende Erfindung betrifft daher ebenfalls ein Verfahren zur Direktlackierung von Metall- und Kunst-stoffsubstraten, das dadurch gekennzeichnet ist, daß direkt auf das Substrat der die Füllstoffpaste A) enthaltende Basislack B) aufgebracht wird, nach kurzer Zwischenablüftung ein Füllstoffpasten-freier Basislack appliziert wird, nach kurzem Ablüften mit einem Klarlack überlackiert wird und anschließend gemeinsam unter Erwärmen ausgehärtet wird. Der erfindungsgemäße Basislack B) wird also gemäß der vorliegenden Erfindung direkt auf das Substrat appliziert. Bei der Beschichtung von Kunststoffsubstraten ist es möglich, aber nicht unbedingt erforderlich, das Substrat einer Vorbehandlung (Beflammen, Plasma, Corona) zu unterziehen. Nach kurzer Zwischenablüftung wird dann ein üblicher Basislack appliziert, der jedoch keine Füllstoffpaste A) enthält. Beispiele für geeignete Füllstoffpasten-freie Basislacke sind die bereits oben beschriebenen üblichen Basislackzusammensetzungen C), welche ein oder mehrere Bindemittel, Rheologiehilfsmittel, Farb- und/oder Effektpigmente und organische Lösemittel enthalten. Nach erneutem Ablüften wird das beschichtete Metall- oder Kunststoffsubstrat mit einem üblichen Klarlack überlackiert. Anschließend werden die aufgebrachten Schichten gemeinsam unter Erwärmen ausgehärtet. Unter kurzem Ablüften ist ein Ablüften beispielsweise bei einer Temperatur zwischen 20 und 50 °C zu verstehen. Als Klarlacke werden übliche im Handel erhältliche witterungsbeständige Klarlacke verwendet. Geeignet hierfür sind beispielsweise isocyanathärtende Zweikomponenten-Klarlacke auf der Basis von Polyester- oder Acrylatharzen sowie für die Hochtemperaturtrocknung von Metallen geeignete selbstvernetzende 1-Komponenten-Klarlacke auf Polyesterharz- oder Polyacrylatharzbasis. Derartige Lacksysteme sind üblich und dem Fachmann bekannt. Beispiele sind beschrieben in der Druckschrift "Produkte für die Lackindustrie", Band 2, Desmodur/Desmophen der Firma Bayer sowie in Houben Weyl "Methoden der Organischen Chemie", Band 14/2, Makromolekulare Stoffe, Seite 57, Polyurethane, bearbeitet von E. Müller.

Der die Füllstoffpaste A) enthaltende Basislack B) wird derart aufgetragen, daß eine Trockenfilmschichtstärke im Bereich von 12 bis 17 µm resultiert. Der nach kurzer Zwischenablüftung applizierte Füllstoffpasten-freie Basislack wird üblicherweise in einer Trockenfilm-schichtstärke von 7 bis 10 µm aufgebracht.

Das vorstehend beschriebene Verfahren ist besonders zur Beschichtung von Kunststoff-Anbauteilen in der Automobilindustrie geeignet. Bei den Kunststoffsubstraten handelt es sich um polare Kunststofftypen, wie Polycarbonat, Polyamid, Polystyrol, Styrolcopolymerisate, Polyester, Polyphenylenoxide sowie Blends dieser Kunststofftypen, Reaktionskunststoffe, z. B. PUR-RIM, SMC, BMC u. ä.. Ggf. kann es sich auch um Polyolefinsubstrate vom Polyethylen- und Polypropylentyp handeln, wenn diese einen relativ hohen Kautschukgehalt aufweisen, wie z. B. das unter der Handelsbezeichnung Keltan TP 0550 (Hersteller DSM) bekannte PP-EPDM, sowie bsw. mittels Beflammung o. ä. oberflächenaktivierte Polyolefin-Typen.

Bei der Beschichtung von Metallsubstraten ist darauf zu achten, ob diese für die Außen- oder Innenanwendung bestimmt sind. Für die Außenanwendung, z. B. bei Metallsubstraten zur Herstellung von Automobilkarossen, ist es größtenteils notwendig, mittels Elektrotauchlackierung oder anderweitig korrosionsgeschützte Metalle zu verwenden. Bei der Lackierung mit der erfindungsgemäßen Füllstoffpaste A) kann in diesem Fall auf die Verwendung eines Füllers verzichtet werden, was von enormem Vorteil ist. Handelt es sich um Metallsubstrate für die Innenanwendung, bsw. um Haushaltsgeräte, kann der die Füllstoffpaste A) enthaltende Basislack direkt auf das blanke Metall appliziert werden.

Die Erfindung betrifft des weiteren ein Verfahren zum Lackieren von mittels Elektrotauchlackierung grundierten Metallsubstraten, das dadurch gekennzeichnet ist, daß auf das elektrotauchgrundierte Metallsubstrat der die Füllstoffpaste A) enthaltende Basislack B) appliziert wird, nach kurzer Zwischenablüftung ein Füllstoffpasten-freier Basislack appliziert wird, nach kurzem Ablüften mit einem Klarlack überlackiert wird und anschließend gemeinsam unter Erwärmen ausgehärtet wird. Bezüglich geeigneter Füllstoffpasten-freier Basislacke, geeigneter Klarlacke und üblicher Trockenfilmschichtstärken wird auf die vorherigen Ausführungen verwiesen. Der besondere Vorteil der erfindungsgemäßen Verfahren zur Beschichtung von Metallsubstraten bzw. elektrotauchgrundierter Metallsubstrate ist darin begründet, daß auf die Applikation eines Füllers, der normalerweise vor der Applikation des Basislackes aufgebracht wird, verzichtet werden kann. Der mögliche Verzicht auf die Füllerschicht beinhaltet ein enormes Einsparungspotential und ist daher aus wirtschaftlichen und ökologischen Gründen besonders vorteilhaft.

Der Vorteil der erfindungsgemäßen Verfahren liegt insbesondere darin, daß auf die üblicherweise notwendige vorherige Grundierung bzw. Vorlackierung bei Kunst-stoffsubstraten und ggf. auf eine Grundierung, aber auf jeden Fall auf die Applikation üblicherweise notwendiger Füllerschichten verzichtet werden kann. Durch den Zusatz der erfindungsgemäßen Füllstoffpaste A) zu einem üblichen Basislacksystem C) wird eine ausgezeichnete Haftung sowie eine gleichzeitige hervorragende Abdeckung der üblichen Substratfehler, beispielsweise Riefen, Fließlinien und Poren, erzielt. Durch die anschließende Beschichtung mit einem Füllstoffpastenfreien Basislack wird eine hervorragende Wetterstabilität und Farbtongenauigkeit der erhaltenen Beschichtungen erreicht. Die Verwendung der Füllstoffpaste A) ist für das hohe technologische Niveau des Gesamtsystems, beispielsweise hinsichtlich Steinschlagbeständigkeit, verantwortlich. Das Vorliegen von Farb- und/oder Effektpigmenten des gewünschten Farbtons bereits in der ersten, modifzierten Basislackschicht ermöglicht das Überlackieren mit einer sehr dünnen abschließenden Basislackschicht. Der Auftrag aller Lackschichten erfolgt üblicherweise durch pneumatische Spritzapplikationen. Beim Einsatz elektrisch leitfähiger Pigmente in der erfindungsgemäßen Füllstoffpaste A) bei der Kunststofflackierung sowie generell bei der Beschichtung metallischer Substrate ist eine elektrostatische Applikation der weiteren Lackschichten möglich.

Die vorliegende Erfindung betrifft ebenfalls die Verwendung der Füllstoffpaste A) in Basislacken zur grundierungsfreien Beschichtung von Kunststoff- und Metallsubstraten sowie die Verwendung der Füllstoffpaste A) in Basislacken B) zur Beschichtung von mittels Elektrotauchlackierung grundierten Metallsubstraten.

Nachfolgend wird die Erfindung anhand von Ausführungsbeispielen näher erläutert. Dabei bedeuten Teile Gewichtsteile, sofern nichts anderes angegeben wird.

### Herstellung einer hellen Pigmentpaste A1:

50 % einer 51%igen Lösung eines Polyurethanelastomers (Handelsprodukt Uraflex XP 221 der Firma DSM) und 50 % Titandioxid (Handelsprodukt Titan Rutil 2057) werden 15 min dissolvert und anschließend 45 min lang bei max. 50 °C auf einer Perlmühle bis zu einer Kornfeinheit von < 15 µm gemahlen. Das Mahlgut, als 50 % des Gesamtrezepts berechnet, wird mit weiteren 50 % des gleichen Polyurethanharzes aufgelackt.

### Herstellung einer dunklen, leitfähigen Füllstoffpaste A2:

Es wird analog der Herstellung der hellen Pigmentpaste A1 verfahren mit dem Unterschied, daß statt 50 % Titandioxid 47 % Titandioxid und 3 % Leitruß (Handelsprodukt Ketjen Black der Firma AKZO) eingemahlen werden.

### Herstellung einer hellen Pigmentpaste A3:

Es wird analog der Herstellung der hellen Pigmentpaste A1 verfahren mit dem Unterschied, daß statt 50 % der Lösung des Polyurethanelastomers Uraflex XP 221 40 % dieser Lösung sowie 10 % einer Melaminharzlösung (Handelsprodukt Maprenal MF 800, 55 %ig in Isobutanol) verwendet werden.

### Herstellung des modifizierten Basislacks B1:

70 % eines konventionellen Medium-Solid-Metallic-Basislackes (GE 70 - 79-Reihe der Firma BASF Lacke + Farben AG) werden unter Rühren mit 30 % der Füllstoffpaste A1 versetzt und mit einem 1:2:1-Gemisch aus Butylacetat, Methoxypropylacetat und Xylol auf eine Spritzviskosität von 20 DIN 4 sec. eingestellt.

### Herstellung des modifizierten Basislackes B2:

Es wird wie bei der Herstellung des modifizierten Basislackes B1 verfahren mit dem Unterschied, daß die Füllstoffpaste A2 anstelle der Füllstoffpaste A1 verwendet wird.

### Herstellung des modifizierten Basislackes B3:

Es wird wie bei der Herstellung des modifizierten Basislackes B1 verfahren mit dem Unterschied, daß die Füllstoffpaste A3 an Stelle der Füllstoffpaste A1 eingesetzt wird.

### Beispiel 1:

### Pneumatische Lackierung von Kunststoffteilen

Tafeln oder Anbauteile aus Polycarbonatblends werden mit Isopropanol gewaschen und getrocknet. Der zuvor beschriebene Basislack B1 wird mit einer Fließbecherpistole (Spritzdruck: 4-5 bar, 1,3 mm Düse) in einem Kreuzgang aufgetragen. Die Trockenschichtstärke erreicht dabei 12 bis 17 µm. Nach ca. 2 bis 3 min. Ablüften bei Kabinentemperatur erfolgt der Auftrag des unmodifizierten Basislackes in einem weiteren Kreuzgang. Die Trockenschichtstärke der unmodifizierten Basislackschicht beträgt ca. 7 bis 10 µm. Es erfolgt während 5 min bei Raumtemperatur eine Ablüftung. Dann wird ein handelsüblicher zweikomponentiger Polyurethan-Klarlack auf Polyesterbasis (Handelsprodukt GP 71-0102 der Firma BASF Lacke + Farben AG) nach dem Ablüftvorgang mit gleichen Spritzparametern in 2 Kreuzgängen aufgetragen, so daß eine Trockenfilm-Schichtstärke von 25 bis 35 µm resultiert. Das lackierte Kunststoffteil wird nach weiteren 10 bis 15 min Ablüften bei 80 °C 30 min in einem Umluftofen getrocknet.

### Beispiel 2:

### Elektrostatische Lackierung von Kunststoffteilen

Der Auftrag der beiden Basislackschichten wird analog Beispiel 1 durchgeführt, wobei als Füllstoffpastenmodifizierter Basislack der Basislack B2 eingesetzt wird. Die Lackierung des im Beispiel 1 verwendeten Klarlacks erfolgt nun nach Erdung des Teils über elektrostatisch unterstützte pneumatische Pistolen oder über eine Hochrotationsglocke.

### Beispiel 3:

### Pneumatische Lackierung von Metallteilen

Tafeln oder Formkörper aus phosphatiertem Stahl (Bonder 26 der Firma Chemetall) werden mit Isopropanol gewaschen, getrocknet und anschließend wie in Beispiel 1 beschrieben beschichtet, wobei als Füllstoffpasten enthaltender Basislack der Basislack B3 und anschließend der entsprechende unmodifizierte, d. h. Füllstoffpasten-freie Basislack verwendet wird. Nach dem Ablüften der beiden Basislackschichten wird mit einem handelsüblichen selbstvernetzenden Klarlack auf Acrylatharzbasis (Handelsprodukt FF 92-0102 der Firma BASF Lacke + Farben AG) mit gleichen Spritzparametern in 2 Kreuzgängen appliziert, so daß eine Trockenfilmschichtstäre von 25 bis 35 µm resultiert. Das fertig lackierte Metallteil wird nach weiterer Ablüftzeit von 5 Minuten in einem Umluftofen bei 130°C 20 Minuten getrocknet.

### Technologische Prüfungen:

Die lackierten Teile werden 7 Tage bei Raumtemperatur bzw. 24 h forciert bei 60 °C gealtert. Folgende Testergebnisse werden in den Beispielen 1, 2 und 3 erhalten:
Gitterschnitt mit Tesaabriß (DIN 53 151): Wert 0
Dampfstrahltest nach BMW: i. O. (keine Abplatzung)
Steinschlag nach BMW: 0 (keine Abplatzung)
Blasen nach 240 h Konstantklima: mogo/gt ebenfalls 0.

## Patentansprüche

1. Basislack B) zur Beschichtung von Metall- und Kunststoffsubstraten, dadurch gekennzeichnet, daß er 10 bis 70 Gew.-% einer Füllstoffpaste A), enthaltend
a1) 5 bis 50 Gew.-%, bevorzugt 30 bis 45 Gew.-%, eines Polyurethanharzes oder mehrerer Polyurethanharze,
a2) 0 bis 30 Gew.-% eines oder mehrerer Aminoplastharze und/oder eines blockierten Polyisocyanats oder mehrerer blockierter Polyisocyanate,
a3) 0 bis 50 Gew.-%, bevorzugt 0 bis 10 Gew.-%, eines oder mehrerer von al) sich unterscheidender physikalisch trocknender Bindemittel,
a4) 5 bis 35 Gew.-% eines oder mehrerer Füllstoffe und/oder Extender,
a5) 0 bis 15 Gew.-% Farb- und/oder Effektpigmente,
a6) 0 bis 5 Gew.-% eines oder mehrerer Rheologiehilfsmittel und
a7) 20 bis 60 Gew.-% organische Lösemittel,
wobei die Summe der Komponenten a1) bis a7) jeweils 100 Gew.-% beträgt,
und 90 bis 30 Gew.-% einer üblichen Basislackzusammensetzung C), enthaltend ein oder mehrere Bindemittel, gegebenenfalls Rheologiehilfsmittel, Farb- und/oder Effektpigmente und organische Lösemittel, enthält, wobei das Gesamtgewicht des Basislackes B) 100 Gew.-% beträgt.

2. Basislack B) nach Anspruch 1, dadurch gekennzeichnet, daß er 30 bis 60 Gew.-% der Füllstoffpaste A) und 70 bis 40 Gew.-% der Basislackzusammensetzung C) enthält.

3. Verfahren zur Direktlackierung von Kunststoffsubstraten, dadurch gekennzeichnet, daß direkt auf das Substrat der die Füllstoffe A) enthaltende Basislack B) gemäß Anspruch 1 oder 2 aufgebracht wird, nach kurzer Zwischenablüftung ein Füllstoffpasten-freier Basislack appliziert wird, nach kurzem Ablüften mit einem Klarlack überlackiert wird und anschließend gemeinsam unter Erwärmen ausgehärtet wird.

4. Verfahren zur Direktlackierung von Metallsubstraten, dadurch gekennzeichnet, daß direkt auf das Metallsubstrat der die Füllstoffpaste A) enthaltende Basislack B) gemäß Anspruch 1 oder 2 aufgebracht wird, nach kurzer Zwischenablüftung ein Füllstoffpasten-freier Basislack appliziert wird, nach kurzem Ablüften mit einem Klarlack überlackiert wird und anschließend gemeinsam unter Erwärmen ausgehärtet wird.

5. Verfahren zum Lackieren von mittels Elektrotauchlackierung grundierten Metallsubstraten, dadurch gekennzeichnet, daß auf das elektrotauchgrundierte Metallsubstrat der die Füllstoffpaste A) enthaltende Basislack B) gemäß Anspruch 1 oder 2 aufgebracht wird, nach kurzer Zwischenablüftung ein Füllstoffpasten-freier Basislack appliziert wird, nach kurzem Ablüften mit einem Klarlack überlackiert wird und anschließend gemeinsam unter Erwärmen ausgehärtet wird.

6. Verwendung einer Füllstoffpaste A), enthaltend
a1) 5 bis 50 Gew.-%, bevorzugt 30 bis 45 Gew.-%, eines Polyurethanharzes oder mehrerer Polyurethanharze,
a2) 0 bis 30 Gew.-% eines oder mehrerer Aminoplastharze und/oder eines blockierten Polyisocyanats oder mehrerer blockierter Polyisocyanate,
a3) 0 bis 50 Gew.-%, bevorzugt 0 bis 10 Gew.-%, eines oder mehrerer von al) sich unterscheidender physikalisch trocknender Bindemittel,
a4) 5 bis 35 Gew.-% eines oder mehrerer Füllstoffe und/oder Extender,
a5) 0 bis 15 Gew.-% Farb- und/oder Effektpigmente,
a6) 0 bis 5 Gew.-% eines oder mehrerer Rheologiehilfsmittel und
a7) 20 bis 60 Gew.-% organische Lösemittel,
wobei die Summe der Komponenten a1) bis a7) jeweils 100 Gew.-% beträgt, in Basislacken zur Direktlackierung von Kunst-stoffsubstraten.

7. Verwendung einer Füllstoffpaste A), enthaltend
a1) 5 bis 50 Gew.-%, bevorzugt 30 bis 45 Gew.-%, eines Polyurethanharzes oder mehrerer Polyurethanharze,
a2) 0 bis 30 Gew.-% eines oder mehrerer Aminoplastharze und/oder eines blockierten Polyisocyanats oder mehrerer blockierter Polyisocyanate,
a3) 0 bis 50 Gew.-%, bevorzugt 0 bis 10 Gew.-%, eines oder mehrerer von al) sich unterscheidender physikalisch trocknender Bindemittel,
a4) 5 bis 35 Gew.-% eines oder mehrerer Füllstoffe und/oder Extender,
a5) 0 bis 15 Gew.-% Farb- und/oder Effektpigmente,
a6) 0 bis 5 Gew.-% eines oder mehrerer Rheologiehilfsmittel und
a7) 20 bis 60 Gew.-% organische Lösemittel,
wobei die Summe der Komponenten a1) bis a7) jeweils 100 Gew.-% beträgt, in Basislacken zur Direktbeschichtung von Metallsubstraten.

8. Verwendung einer Füllstoffpaste A), enthaltend
a1) 5 bis 50 Gew.-%, bevorzugt 30 bis 45 Gew.-%, eines Polyurethanharzes oder mehrerer Polyurethanharze,
a2) 0 bis 30 Gew.-% eines oder mehrerer Aminoplastharze und/oder eines blockierten Polyisocyanats oder mehrerer blockierter Polyisocyanate,
a3) 0 bis 50 Gew.-%, bevorzugt 0 bis 10 Gew.-%, eines oder mehrerer von al) sich unterscheidender physikalisch trocknender Bindemittel,
a4) 5 bis 35 Gew.-% eines oder mehrerer Füllstoffe und/oder Extender,
a5) 0 bis 15 Gew.-% Farb- und/oder Effektpigmente,
a6) 0 bis 5 Gew.-% eines oder mehrerer Rheologiehilfsmittel und
a7) 20 bis 60 Gew.-% organische Lösemittel,
wobei die Summe der Komponenten a1) bis a7) jeweils 100 Gew.-% beträgt, in Basislacken zur Beschichtung von mittels Elektrotauchlackierung grundierten Metallsubstraten.

## Claims

1. Basecoat B) for coating substrates of metal and of plastic, characterized in that it contains from 10 to 70% by weight of a filler paste A), comprising
a1) from 5 to 50% by weight, preferably from 30 to 45% by weight, of a polyurethane resin or a plurality of polyurethane resins,
a2) from 0 to 30% by weight of one or more amino resins and/or of a blocked polyisocyanate or a plurality of blocked polyisocyanates,
a3) from 0 to 50% by weight, preferably from 0 to 10% by weight, of one or more physically drying binders which are different from al),
a4) from 5 to 35% by weight of one or more fillers and/or extenders,
a5) from 0 to 15% by weight of colour pigments and/or special-effect pigments,
a6) from 0 to 5% by weight of one or more rheological auxiliaries, and
a7) from 20 to 60% by weight of organic solvents,
the sum of components a1) to a7) being in each case 100% by weight,
and from 90 to 30% by weight of a conventional basecoat composition C), comprising one or more binders, if desired rheological auxiliaries, colour pigments and/or special-effect pigments and organic solvents, the total weight of the basecoat B) being 100% by weight.

2. Basecoat B) according to Claim 1, characterized in that it contains from 30 to 60% by weight of the filler paste A) and from 70 to 40% by weight of the basecoat composition C).

3. Process for the direct coating of plastic substrates, characterized in that the basecoat B) according to Claim 1 or 2, containing the fillers A), is applied directly to the substrate, after a brief intermediate flash-off a basecoat which is free from filler pastes is applied, and the basecoats are flashed off briefly, coated over with a clearcoat and subsequently cured together, with heating.

4. Process for the direct coating of metal substrates, characterized in that the basecoat B) according to Claim 1 or 2, containing the filler paste A), is applied directly to the metal substrate, after a brief intermediate flash-off a basecoat which is free from filler pastes is applied, and the basecoats are flashed off briefly, coated over with a clearcoat and subsequently cured together, with heating.

5. Process for coating metal substrates primed by means of electrodeposition coating, characterized in that the basecoat B) according to Claim 1 or 2, containing the filler paste A), is applied to the electrodeposition-primed metal substrate, after a brief intermediate flash-off a basecoat which is free from filler pastes is applied, and the basecoats are flashed off briefly, coated over with a clearcoat and subsequently cured together, with heating.

6. Use of a filler paste A), comprising
a1) from 5 to 50% by weight, preferably from 30 to 45% by weight, of a polyurethane resin or a plurality of polyurethane resins,
a2) from 0 to 30% by weight of one or more amino resins and/or of a blocked polyisocyanate or a plurality of blocked polyisocyanates,
a3) from 0 to 50% by weight, preferably from 0 to 10% by weight, of one or more physically drying binders which are different from a1),
a4) from 5 to 35% by weight of one or more fillers and/or extenders,
a5) from 0 to 15% by weight of colour pigments and/or special-effect pigments,
a6) from 0 to 5% by weight of one or more rheological auxiliaries, and
a7) from 20 to 60% by weight of organic solvents,
the sum of components a1) to a7) being in each case 100% by weight, in basecoats for the direct coating of plastic substrates.

7. Use of a filler paste A), comprising
a1) from 5 to 50% by weight, preferably from 30 to 45% by weight, of a polyurethane resin or a plurality of polyurethane resins,
a2) from 0 to 30% by weight of one or more amino resins and/or of a blocked polyisocyanate or a plurality of blocked polyisocyanates,
a3) from 0 to 50% by weight, preferably from 0 to 10% by weight, of one or more physically drying binders which are different from a1),
a4) from 5 to 35% by weight of one or more fillers and/or extenders,
a5) from 0 to 15% by weight of colour pigments and/or special-effect pigments,
a6) from 0 to 5% by weight of one or more rheological auxiliaries, and
a7) from 20 to 60% by weight of organic solvents,
the sum of components a1) to a7) being in each case 100% by weight, in basecoats for the direct coating of metal substrates.

8. Use of a filler paste A), comprising
a1) from 5 to 50% by weight, preferably from 30 to 45% by weight, of a polyurethane resin or a plurality of polyurethane resins,
a2) from 0 to 30% by weight of one or more amino resins and/or of a blocked polyisocyanate or a plurality of blocked polyisocyanates,
a3) from 0 to 50% by weight, preferably from 0 to 10% by weight, of one or more physically drying binders which are different from a1),
a4) from 5 to 35% by weight of one or more fillers and/or extenders,
a5) from 0 to 15% by weight of colour pigments and/or special-effect pigments,
a6) from 0 to 5% by weight of one or more rheological auxiliaries, and
a7) from 20 to 60% by weight of organic solvents,
the sum of components a1) to a7) being in each case 100% by weight, in basecoats for the coating of metal substrates primed by means of electrodeposition coating.

## Revendications

1. Peinture de base B) pour le revêtement de substrats métalliques et plastiques, caractérisée en ce qu'elle contient de 10 à 70 % en poids d'une matière de charge sous forme de pâte A), contenant
a1) de 5 à 50 % en poids, de préférence de 30 à 45 % en poids, d'une résine de polyuréthanne ou de plusieurs résines de polyuréthanne,
a2) de 0 à 30 % en poids d'une ou de plusieurs résines aminoplastes et/ou d'un polyisocyanate bloqué ou de plusieurs polyisocyanates bloqués,
a3) de 0 à 50 % en poids, de préférence de 0 à 10 % en poids d'un ou de plusieurs liants à séchage physique, se différenciant de a1),
a4) de 5 à 35 % en poids d'une ou de plusieurs matières de charge et/ou de diluants,
a5) de 0 à 15 % en poids de pigments colorés et/ou à effet,
a6) de 0 à 5 % en poids d'un ou de plusieurs agents auxiliaires de rhéologie et
a7) de 20 à 60 % en poids de solvants organiques,
la somme des composants a1) à a7) étant à chaque fois de 100 % en poids,
et de 90 à 30 % en poids d'une composition de peinture de base usuelle C), contenant un ou plusieurs liants, le cas échéant, des agents auxiliaires de rhéologie, des pigments colorés et/ou à effet et des solvants organiques, le poids total de la peinture de base B) étant de 100 % en poids.

2. Peinture de base B) selon la revendication 1, caractérisée en ce qu'elle contient de 30 à 60 % en poids de la matière de charge sous forme de pâte A) et de 70 à 40 % en poids de la composition de peinture de base C).

3. Procédé de peinture directe de substrats plastiques, caractérisé en ce que l'on applique directement sur le substrat la peinture de base B) contenant les matières de charge A), selon la revendication 1 ou 2, que l'on applique, après une courte ventilation intermédiaire, une peinture de base exempte de matières de charge sous forme de pâte, que l'on procède, après une courte ventilation, à la sur-peinture avec une peinture claire, et que l'on procède ensuite au durcissement conjoint avec chauffage.

4. Procédé de peinture directe de substrats métalliques, caractérisé en ce que l'on applique directement sur le substrat métallique la peinture de base B), contenant la matière de charge sous forme de pâte A), selon la revendication 1 ou 2, que l'on applique, après une courte ventilation intermédiaire, une peinture de base exempte de matières de charge sous forme de pâte, que l'on procède, après une courte ventilation, à la sur-peinture avec une peinture claire, et que l'on procède ensuite au durcissement conjoint avec chauffage.

5. Procédé de peinture de substrats métalliques apprêtés par peinture d'électrodéposition, caractérisé en ce que l'on applique sur le substrat métallique apprêté par électrodéposition la peinture de base B) contenant la matière de charge sous forme de pâte A), selon la revendication 1 ou 2, que l'on applique, après une courte ventilation intermédiaire, une peinture de base exempte de matière de charge sous forme de pâte, que l'on procède, après une courte ventilation, à la sur-peinture avec une peinture claire, et que l'on procède ensuite au durcissement conjoint avec chauffage.

6. Utilisation d'une matière de charge sous forme de pâte A) contenant
a1) de 5 à 50 % en poids, de préférence de 30 à 45 % en poids d'une résine de polyuréthanne ou de plusieurs résines de polyuréthanne,
a2) de 0 à 30 % en poids d'une ou de plusieurs résines aminoplastes et/ou d'un polyisocyanate bloqué ou de plusieurs polyisocyanates bloqués,
a3) de 0 à 50 % en poids, de préférence de 0 à 10 % en poids d'un ou de plusieurs liants à séchage physique se différenciant de a1),
a4) de 5 à 35 % en poids d'une ou de plusieurs matières de charge et/ou de diluants,
a5) de 0 à 15 % en poids de pigments colorés et/ou à effet,
a6) de 0 à 5 % en poids d'un ou de plusieurs agents auxiliaires de rhéologie et
a7) de 20 à 60 % en poids de solvants organiques,
la somme des composants a1) à a7) étant à chaque fois de 100 % en poids, dans des peintures de base en vue de la peinture directe de substrats plastiques.

7. Utilisation d'une matière de charge sous forme de pâte A) contenant
a1) de 5 à 50 % en poids, de préférence de 30 à 45 % en poids d'une résine de polyuréthanne ou de plusieurs résines de polyuréthanne,
a2) de 0 à 30 % en poids d'une ou de plusieurs résines aminoplastes et/ou d'un polyisocyanate bloqué ou de plusieurs polyisocyanates bloqués,
a3) de 0 à 50 % en poids, de préférence de 0 à 10 % en poids d'un ou de plusieurs liants à séchage physique, se différenciant de a1),
a4) de 5 à 35 % en poids d'une ou de plusieurs matières de charge et/ou de diluants,
a5) de 0 à 15 % en poids de pigments colorés et/ou à effet,
a6) de 0 à 5 % en poids d'un ou de plusieurs agents auxiliaires de rhéologie et
a7) de 20 à 60 % en poids de solvants organiques,
la somme des composants a1) à a7) étant à chaque fois de 100 % en poids, dans des peintures de base en vue de la peinture directe de substrats métalliques.

8. Utilisation d'une matière de charge sous forme de pâte A) contenant
a1) de 5 à 50 % en poids, de préférence de 30 à 45 % en poids d'une résine de polyuréthanne ou de plusieurs résines de polyuréthanne,
a2) de 0 à 30 % en poids d'une ou de plusieurs résines aminoplastes et/ou d'un polyisocyanate bloqué ou de plusieurs polyisocyanates bloqués,
a3) de 0 à 50 % en poids, de préférence de 0 à 10 % en poids d'un ou de plusieurs liants à séchage physique, se différenciant de a1),
a4) de 5 à 35 % en poids d'une ou de plusieurs matières de charge et/ou de diluants,
a5) de 0 à 15 % en poids de pigments colorés et/ou à effet,
a6) de 0 à 5 % en poids d'un ou de plusieurs agents auxiliaires de rhéologie et
a7) de 20 à 60 % en poids de solvants organiques,
la somme des composants a1) à a7) étant à chaque fois de 100 % en poids, dans des peintures de base en vue du revêtement de substrats métalliques apprêtés par peinture d'électrodéposition.
